# EUROPEAN PATENT SPECIFICATION

(11) **EP 2 975 276 B1**
(45) Date of publication and mention of the grant of the patent: **16.01.2019**
(21) Application number: 15176416.4
(22) Date of filing: 13.07.2015
(51) Int. Cl.: F16C 3/03, B01D 46/00, B01D 46/10

(54) **BI-DIRECTIONAL AIR FILTERED INTERNAL BREATHER PLUG**
BIDIREKTIONALER LUFTGEFILTERTER INNERER ENTLÜFTUNGSANLAGENSTECKER
SYTÈME DE VENTILATION INTERNE FILTRÉ D'AIR BIDIRECTIONNEL

(30) Priority: 18.07.2014 TR 201408527
(43) Date of publication of application: 20.01.2016
(73) Proprietor: Tirsan Kardan Sanayi Ve Ticaret Anonim Sirketi, 45030 Manisa (TR)
(72) Inventor: ÖZGÜRLER, Hüseyin, Manisa (TR); TASAN, Korkut, Manisa (TR); SEN, Onur, Manisa (TR)
(74) Representative: Yamankaradeniz, Kemal

(56) References cited:
- US-A- 4 863 499
- US-A1- 2002 132 669
- US-A1- 2011 005 629

## Description

### Technical Field

The present invention is related to cardan shafts that operate between engine or transmission box and differential gear on the motor vehicles and are used for transmitting the power generated in the engine by means of rotating motion.

Said invention is related to bi-directional air filtered internal breather plug that performs air exchange between outer environment and inside of cardan shaft, prevents dust and undesirable impurities from entering into the cardan shaft from the outer environments, and increases the service life of the cardan shaft.

### Prior Art

Cardan shafts are the auxiliary elements that operate between engine or transmission box and differential gear on the motor vehicles and are used for transmitting the power generated in the engine by means of rotating motion. As known, cardan shafts consist of many parts. Two of said parts are yoke shaft and sleeve yoke. Yoke shaft and sleeve yoke are among the unit elements of cardan shaft, which operate in a reciprocal and equal manner. Yoke shaft has male spline form in the outer diameter periphery thereof, whereas sleeve yoke has female spline form in the inner diameter periphery thereof. Thanks to said spline form complementing each other mutually, torque from the engine is transmitted. While the torque is being transmitted, the resultant (x, y, z) distance change arising between two axles, axle and gear box or transfer box as a result of forces applied on the vehicle wheel in accordance with the road conditions, is compensated by means of axial and relative sliding motion of yoke shaft and sleeve yoke thanks to the spline form again.

In accordance with the abovementioned descriptions, a closed inner volume occurs within sleeve yoke and between thereof and yoke shaft. The inner volume expands or narrows in accordance with the positive or negative direction of sliding motion compared to sliding axis. While the air inside is required to be discharged during the narrowing of the volume, the air is required to be taken from the outside during the expanding of said volume. However, as the gap between the spline forms that create the inner volume is sensitive, air intake from outside to inside or vice versa is hardly experienced.

In the present applications, undesirable impurities such as dust are taken into the system together with air while air circulation is being provided. Therefore, spline structures of unit elements are damaged and thus, cardan shaft cannot perform its sliding motion in the course of time. Moreover, in the applications in which impurities that may enter inside from the outer environment are prevented, air circulation cannot be achieved at an adequate level and thus sliding motion is performed slowly or cannot be performed. Therefore, cardan shaft cannot fulfil its main function and has difficulty in performing said function.

In the patent applications numbered GB636304A and US4475737A, air circulation is provided through a hole. Therefore, it is highly possible that undesirable impurities are taken through said hole, especially during the sliding motion, by means of the vacuum that occurs inside. In the patent documents numbered US8734261B1 and US6348002B1, a cover is used; however, inadequate circulation is experienced here.

Patent document US 2011/0005629 (R.J.Ostrander) shows a bi-directional breather plug as described in the preamble of claim 1.

### Description of the Present Invention

The object of the present invention is to disclose a bi-directional air filtered internal breather plug embodiment between the cardan shaft and the outer environment that prevents dust and undesirable impurities from entering into the cardan shaft from the outer environment and provides air circulation.

An object of the present invention is to increase the service life of the cardan shaft thanks to the bi-directional air filtered internal breather plug.

Another object of the present invention is to take air into the system and discharge air from the system to the outside by means of bi-directional air filtered internal breather plug and thus, to filter undesirable impurities such as dust, dirt, water and the like.

Another object of the present invention is to prevent physical damages such as abrasion on the spline forms of unit elements that perform sliding motion, as the intake of impurities such as dust and etc. into the system is prevented.

Another object of the present invention is to enable the use of said embodiment in different embodiments that require air circulation apart from the cardan shafts.

Another object of the present invention is to provide an effective functioning by means of equalizing negative and positive pressure during the axial linear sliding motion performed by the parts of cardan shaft, by taking air from the outer environment and discharging air to the outer environment.

In order to achieve the abovementioned objects, the present invention is bi-directional breather plug which prevents the intake of dust and undesirable impurities into the cardan shaft from the outer environment, and the sleeve yoke of which is adapted at the mounting wall of yoke opening, characterized in comprising;
- a main body having a filter housing fixed to the mounting wall of yoke opening of said sleeve yoke,
- a filter positioned in the filter housing of said main body,
- a filter sheet positioned in the filter housing of said main body by being embedded, and having air holes thereon,
- and, a cover mounted on said filter sheet by fitting at the mounting axis.

### Figures to Facilitate the Understanding of the Present Invention

Figure 1 is the lateral two-dimensional sectional view of the bi-directional breather plug embodiment according to the present invention, which is adapted to the sleeve yoke of cardan shaft.
Figure 2 is the two-dimensional mounted view of the yoke shaft and sleeve yoke of cardan shaft.
Figure 3 is the close-shot sectional mounted view of the bi-directional breather plug embodiment according to the present invention together with sleeve yoke.
Figure 4 is the individual perspective view of the bi-directional breather plug embodiment according to the present invention.
Figure 5 is the individual two-dimensional sectional view of the bi-directional breather plug embodiment according to the present invention.
Figure 6 is the individual perspective demounted view of the bi-directional breather plug embodiment according to the present invention.
Figure 7 is the two-dimensional sectional demounted view of the bi-directional breather plug embodiment according to the present invention.
Figure 8 is the close-shot view of the conical air channels formed on the cover.

| | |
|---|---|
| **Part Numerals** | 23.3- S form |
| 10- Cardan shaft | 23.4- Air flow gate |
| 11-Yoke shaft | 24- Cover |
| 12-Sleeve yoke | 24.1-Bended edges |
| 13-Spline-shaped contact surfaces | 24.2 Positioning channel |
| 14- Axial sliding motion | 24.3 Positioning angle |
| 15- Cardan shaft rotating motion direction | 24.4 Conical air channel |
| 16-Yoke opening | 25-Filter housing |
| 17-Mounting wall | 26-Air holes |
| 20-Bi-directional breather plug | 27-Recess |
| 21-Body | 28-Positioning wall |
| 21.1 Bottom bended edges | 29-Lateral protrusions |
| 22-Filter | H-Air intake direction |
| 23-Filter sheet | X-Mounting Axis |
| 23.1 Positioning edges | P-Orifice influence area |
| 23.2 Bearing protrusion | Y-Mounting plane |

### Detailed Description of the Present Invention

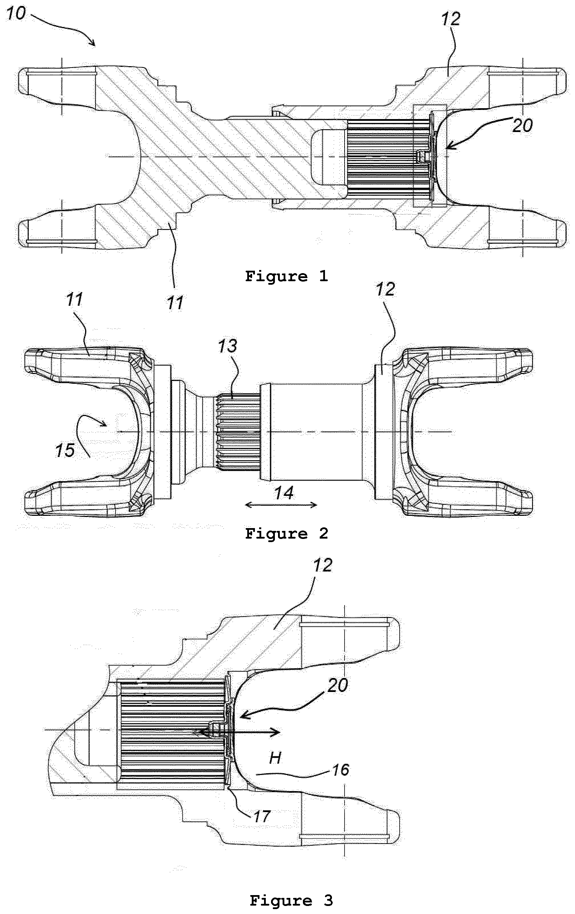

In Figures 1 and 3, the view of bi-directional breather plug (20), which prevents the intake of dust and undesirable impurities into the cardan shaft (10) from the outer environment, and the sleeve yoke (12) of which is adapted at the mounting wall (17) of yoke opening (16) is illustrated.

The bi-directional breather plug (20) comprises a main body (21) having a filter housing (25) fixed to the mounting wall (17) of yoke opening (16) of said sleeve yoke (12). There are a filter (22) positioned in the filter housing (25) of the main body (21) and filter sheet (23) embedded at the mounting axis (X) in the filter housing on said main body (21), and comprising air holes (26) formed thereon. Moreover, the embodiment comprises a cover (24) that is fixed on said filter sheet (23) by fitting at the mounting axis (X).

Filter sheet (23) comprises bearing protrusion (23.2) that centers thereof to the filter housing (25). Recesses (27) are formed on the body (21) in order to enable the air to pass through the air holes (26) on the filter sheet (23) and reach the filter (22). In addition, the cover (24) comprises bended edges (24.1) formed at the bottom surface edges and positioning channel (24.2) that grasps the filter sheet (23) by means of said bended edges (24.1). Said filter sheet (23) has positioning edges (23.1) enclosed in the positioning channel (24.2). However, the cover (24) can also be fixed to the filter sheet (23) by means of adhering methods or connection members. It comprises positioning wall (28) on the body (21) to which the cover (24) integrated with filter sheet (23) is placed and bottom bended edges (21.1) that positions said filter (22) in the filter housing (25). At the same time, positioning edges (23.1) have S form (23.3). It comprises orifice influence area (P) that occurs thanks to said S form (23.3) and enables the air to be discharged easily and complicates the intake of air from outside to inside.

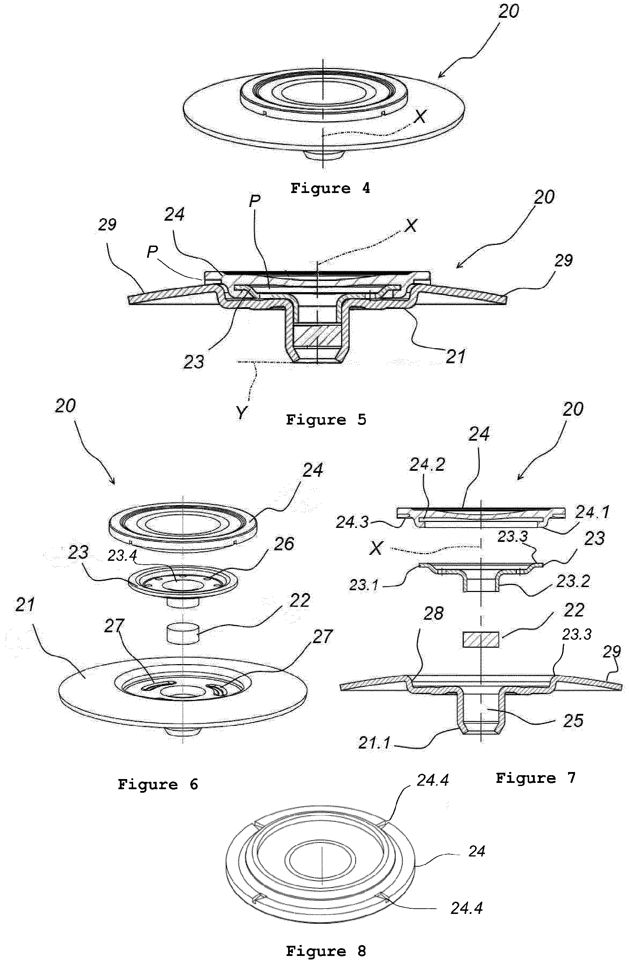

The body (21) is made of sheet material and the main element of the embodiment, which embodies the other unit elements. The bi-directional breather plug (20) can be fixed by means of close fit to the sleeve yoke (12) and then, stacking or welding method. For example, as can be understood from the sectional view in Figure 5, the cover (24) is fixed to the filter sheet (23) by means of positioning channel (24.2) formed via bended edges (24.1). Optionally, it can be fixed by means of adhering methods or connection members.

Crater structure, namely recessed (27) surfaces, is provided on the body (21) in the areas facing the air holes (26) on the filter sheet (23). Moreover, the surface on which the recessed (27) structure is provided, creates an angle with the horizontal plane when required. Thanks to said angle, air intake and discharge are made easier. Thanks to recess (27) structure in the form of crater, the air reaches the filter (22) by passing through the air holes (26) provided peripherally on the filter sheet (23), and the exact opposite situation is experienced for the discharged air. Then, air is taken into the system and discharged from the system by passing through the filter (22).

An "S" form (23.3) that starts at the wide diameter of the body (21) is provided. Thanks to recess (27) structure provided on the body (21) together with said form,an integrity between "S" form (23.3) on the filter sheet (23) and bended edges (24.1) on the cover is achieved and orifice influence area (P) where orifice effect occurs is created. Thanks to orifice effect, convenience is achieved in the air discharge from the system to the outside, while air intake from outside to inside is complicated. Therefore, undesirable factors such as water are kept away from the system. Similarly, "S" form (23.3) on the body (21) and conical air channels (24.4) provided peripherally on the cover (24) and having a volume expanding from outside to inside form provide integrity with each other and create orifice influence area (P) in the inner volume, where orifice effect occurs.

The filter is mounted to the filter housing (25) that is the end section of the body (21) with lower diameter, by means of fitting method. The filter (22) is enclosed and fixed in the body (21) thanks to the filter sheet (23) from the top and bottom bended edges (21.1) with conical narrow form at the end section of the body (21) from the bottom. Therefore, the body (21) serves as a bearing for the filter (22).

Grease oil is used for facilitating the sliding motion in the cardan shafts and preventing the spline forms of unit elements from being damaged due to friction during said motion. Filter (22) is used in the bi-directional breather plug (20) in order to prevent dust and any impurities from entering into grease used and the system by means of air circulation. A filter (22) manufactured by means of sintering can be used as filter and, a filter comprising filtering members such as sponge, wire and the like can also be used. In accordance with the structure of the member used, the filter may have different sizes and geometric features. In the figures, sinter filter (22) is used as an example. The diameter of the powders used in the production of sinter filter (22) can be chosen optionally.

The filter sheet (23) encloses and fixes the filter (22) between thereof and the body (21). On the other hand, air flow from outside to the inside of the filter and from filter to the system or vice versa is achieved by means of the air holes (26) on the filter and air flow gate (23.4) at the inner diameter thereof.

The cover (24) made of elastomeric material covers the top of the body (21) and protects the system against outer factors. It enables air intake and discharge thanks to the conical air channels (24.4) provided at the bottom section thereof. The air channels have a conical structure narrowing from the center to the outer diameter of the cover (24) and create orifice effect thanks to said structure. While orifice effect makes the air discharge to outside easier thanks to pressure change, it complicates entering of the factors such as water and the like inside. The lateral protrusions (29) on the body (21) are configured so as to create a straight angle with the mounting plane (Y) when compared to the mounting axis (X) (See Figure 5). In addition, positioning angle (24.3) having the same angle with the lateral protrusions (29) is formed on the cover (24).

Thanks to the peripheral tapering towards the center on the wall structure, the cover (24) enables the inner volume to narrow by means of inner flexible and easy motion during vacuum in the system and thus, vacuum pressure increases and the air outside penetrates into the system in an easy and rapid manner. Moreover, the inner volume of the embodiment is narrowed and air is discharged easily thanks to concave structure thereof. The positioning edges (23.1) of the filter sheet (23) are fitted into the peripheral positioning channel (24.2) at the inner section of the cover (24) by flexing the cover and thus, mounting is achieved (as the cover is made of elastomeric material, the filter sheet is fitted into the channel by flexing the cover).

## Claims

1. Bi-directional breather plug (20), which prevents the intake of dust and undesirable impurities into the sleeve yoke (12) of a cardan shaft (10) from the outer environment, the plug (20) being adapted to be mounted to the mounting wall (17) of the yoke opening (16), **characterized in** comprising;
- a main body (21) having a filter housing (25) fixed to the mounting wall (17) of yoke opening (16) of said sleeve yoke (12),
- a filter (22) positioned in the filter housing (25) of said main body (21),
- filter sheet (23) embedded at the mounting axis (X) in the filter housing on said main body (21) and comprising air holes (26) formed thereon,
- a cover (24) that is fixed on the filter sheet (23) by fitting at the mounting axis (X)
- conical air channels (24.4) provided peripherally at the bottom surface of said cover (24) and having a volume expanding from outside to inside.

2. Bi-directional breather plug (20) according to Claim 1, **characterized in** comprising bearing protrusion (23.2) that centers said filter sheet (23) to the filter housing (25).

3. Bi-directional breather plug (20) according to Claim 1, **characterized in** comprising recesses (27) formed on the body (21) in order to enable the air to pass through the air holes (26) on the filter sheet (23) and reach the filter (22).

4. Bi-directional breather plug (20) according to Claim 1, **characterized in** comprising bended edges (24.1) formed at the bottom surface edges of said cover (24).

5. Bi-directional breather plug (20) according to Claim 1, **characterized in** comprising orifice influence area (P) that occurs thanks to said conical air channels (24.4) and enables the air to be discharged easily and complicates the intake of air from outside to inside.

6. Bi-directional breather plug (20) according to Claim 4, **characterized in** the cover (24) comprising positioning channel (24.2) to which filter sheet (23) is fixed by means of said bended edges (24.1) thereof.

7. Bi-directional breather plug (20) according to Claim 6, **characterized in** the filter sheet (23) comprising positioning edges (23.1) that are enclosed in the positioning channel (24.2) of said cover (24) and filter sheet (23) fixed to said cover (24) by means of adhering methods or connection members.

8. Bi-directional breather plug (20) according to Claim 1, **characterized in** the body (21) comprising a wall (28), to which the cover (24) integrated with filter sheet (23) is placed.

9. Bi-directional breather plug (20) according to Claim 1, **characterized in** the main body (21) comprising bottom bended edges (21.1) that position said filter (22) in the filter housing (25).

10. Bi-directional breather plug (20) according to Claim 7, **characterized in that** positioning edges (23.1) of said filter sheet (23) have S form (23.3).

11. Bi-directional breather plug (20) according to Claim 10, **characterized in** comprising orifice influence area (P) that occurs thanks to said S form (23.3) and enables the air to be discharged easily and complicates the intake of air from outside to inside.

12. Bi-directional breather plug (20) according to Claim 1, **characterized in that** said filter sheet (23) comprises air flow gate (23.4) that enables air flow from outside to inside of the filter (22) and from here to the system or vice versa.

13. Bi-directional breather plug (20) according to Claim 1, **characterized in** the main body (21) comprising lateral protrusions (29) configured so as to create a straight angle with the mounting plane (Y) when compared to said orthogonal mounting axis (X).

14. Bi-directional breather plug (20) according to Claim 13, **characterized in** the cover (24) comprising positioning angle (24.3) having the same angle with said lateral protrusions (29).

## Patentansprüche

1. Bidirektionaler Entlüftungsanlagenstecker (20), der die Aufnahme von Staub und unerwünschten Verunreinigungen in die Muffengabel (12) einer Kardanwelle (10) aus der äußeren Umgebung verhindert, wobei der Stecker (20) angepasst ist, an die Montagewand (17) der Gabelöffnung (16) montiert zu werden, **dadurch gekennzeichnet, dass** er umfasst:
- einen Hauptkörper (21) mit einem Filtergehäuse (25), das an der Montagewand (17) der Gabelöffnung (16) der Muffengabel (12) befestigt ist,
- einen Filter (22), der im Filtergehäuse (25) des Hauptkörpers (21) positioniert ist,
- Filterplatte (23), die an der Montageachse (X) im Filtergehäuse am Hauptkörper (21) eingebettet ist und umfassend darauf gebildete Luftlöcher (26),
- eine Abdeckung (24), die durch Installation an der Montageachse (X) an der Filterplatte (23) befestigt ist;
- konische Luftkanäle (24.4), die peripher an der unteren Oberfläche der Abdeckung (24) bereitgestellt sind und ein sich von außen nach innen erweiterndes Volumen aufweisen.

2. Bidirektionaler Entlüftungsanlagenstecker (20) nach Anspruch 1, **dadurch gekennzeichnet, dass** er einen Lagervorsprung (23.2) umfasst, der die Filterplatte (23) auf das Filtergehäuse (25) zentriert.

3. Bidirektionaler Entlüftungsanlagenstecker (20) nach Anspruch 1, **dadurch gekennzeichnet, dass** er am Körper (21) geformte Aussparungen (27) umfasst, um der Luft das Durchlaufen der Luftlöcher (26) an der Filterplatte (23) und das Erreichen des Filters (22) zu ermöglichen.

4. Bidirektionaler Entlüftungsanlagenstecker (20) nach Anspruch 1, **dadurch gekennzeichnet, dass** er gekrümmte Kanten (24.1) umfasst, die an den Kanten der unteren Oberfläche der Abdeckung (24) geformt sind.

5. Bidirektionaler Entlüftungsanlagenstecker (20) nach Anspruch 1, **dadurch gekennzeichnet, dass** er eine Öffnungseinflussfläche (P) umfasst, die dank der konischen Luftkanäle (24.4) auftritt und der Luft ermöglicht, einfach abgelassen zu werden, und die Aufnahme von Luft von außen nach innen erschwert.

6. Bidirektionaler Entlüftungsanlagenstecker (20) nach Anspruch 4, **dadurch gekennzeichnet, dass** die Abdeckung (24) einen Positionierungskanal (24.2) umfasst, an den die Filterplatte (23) mithilfe der gekrümmten Kanten (24.1) davon befestigt ist.

7. Bidirektionaler Entlüftungsanlagenstecker (20) nach Anspruch 6, **dadurch gekennzeichnet, dass** die Filterplatte (23) Positionierungskanten (23.1) umfasst, die im Positionierungskanal (24.2) der Abdeckung (24) umschlossen sind und die Filterplatte (23) mithilfe von Klebeverfahren oder Verbindungselementen an der Abdeckung (24) befestigt ist.

8. Bidirektionaler Entlüftungsanlagenstecker (20) nach Anspruch 1, **dadurch gekennzeichnet, dass** der Körper (21) eine Wand (28) umfasst, an der die in die Filterplatte (23) integrierte Abdeckung (24) platziert ist.

9. Bidirektionaler Entlüftungsanlagenstecker (20) nach Anspruch 1, **dadurch gekennzeichnet, dass** der Hauptkörper (21) untere gekrümmte Kanten (21.1) aufweist, die den Filter (22) im Filtergehäuse (25) positionieren.

10. Bidirektionaler Entlüftungsanlagenstecker (20) nach Anspruch 7, **dadurch gekennzeichnet, dass** die Positionierungskanten (23.1) der Filterplatte (23) eine S-Form (23.3) aufweisen.

11. Bidirektionaler Entlüftungsanlagenstecker (20) nach Anspruch 10, **dadurch gekennzeichnet, dass** er eine Öffnungseinflussfläche (P) umfasst, die dank der S-Form (23.3) auftritt und der Luft ermöglicht, einfach abgelassen zu werden, und die Aufnahme von Luft von außen nach innen erschwert.

12. Bidirektionaler Entlüftungsanlagenstecker (20) nach Anspruch 1, **dadurch gekennzeichnet, dass** die Filterplatte (23) ein Luftstromtor (23.4) umfasst, das den Luftstrom von außen nach innen des Filters (22) und von hier zum System oder umgekehrt ermöglicht.

13. Bidirektionaler Entlüftungsanlagenstecker (20) nach Anspruch 1, **dadurch gekennzeichnet, dass** der Hauptkörper (21) seitliche Vorsprünge (29) umfasst, die so konfiguriert sind, dass sie einen geraden Winkel zur Montageplatte (Y) im Vergleich zur orthogonalen Montageachse (X) schaffen.

14. Bidirektionaler Entlüftungsanlagenstecker (20) nach Anspruch 13, **dadurch gekennzeichnet, dass** die Abdeckung (24) einen Positionierungswinkel (24.3) mit demselben Winkel zu den seitlichen Vorsprüngen (29) umfasst.

## Revendications

1. Bouchon de ventilation bidirectionnel (20) qui empêche l'admission de poussière et d'impuretés indésirables dans la noix de cardan de manchon (12) d'un arbre à cardan (10) provenant de l'environnement extérieur, le bouchon (20) étant adapté pour être monté à la paroi de montage (17) de l'ouverture (16) de noix de cardan, caractérisé en comprenant ;
- une corps principal (21) possédant un boîtier de filtre(25) fixé à la paroi de montage (17) de l'ouverture de noix de cardan (16) de ladite noix de cardan de manchon (12),
- un filtre (22) positionné dans le boîtier de filtre (25) du corps principal (21),
- une feuille de filtre (23) intégrée à l'axe de montage (X) dans le boîtier de filtre sur ledit corps principal (21) et comprenant des trous d'air (26) formés sur celui-ci,
- un couvercle (24) qui est fixé sur la feuille de filtre (23) par ajustage au niveau de l'axe de montage (X)
- des canaux d'air coniques (24.4) disposés en périphérie au niveau de la surface inférieure dudit couvercle (24) et possédant un volume se dilatant de l'extérieur vers l'intérieur.

2. Bouchon de ventilation bidirectionnel (20) selon la revendication 1, caractérisé en comprenant une saillie d'appui (23.2) qui centre ladite feuille de filtre (23) par rapport au boîtier du filtre (25).

3. Bouchon de ventilation bidirectionnel (20) selon la revendication 1, caractérisé en comprenant des évidements (27), formés sur le corps (21) afin de permettre à l'air de traverser les trous d'air (26) sur la feuille de filtre (23) et d'atteindre le filtre (22).

4. Bouchon de ventilation bidirectionnel (20) selon la revendication 1, caractérisé en comprenant des bords pliés (24.1) formés au niveau de la surface inférieure dudit couvercle (24).

5. Bouchon de ventilation bidirectionnel (20) selon la revendication 1, caractérisé en comprenant une zone d'influence d'orifice (P) qui se produit grâce auxdits canaux d'air coniques (24.4) et permet à l'air d'être évacué facilement et complique l'admission d'air depuis l'extérieur vers l'intérieur.

6. Bouchon de ventilation bidirectionnel (20) selon la revendication 4, **caractérisé par** le couvercle (24) comprenant un canal de positionnement (24.2) auquel la feuille de filtre (23) est fixée au moyen desdits bords pliés (24.1) de celle-ci.

7. Bouchon de ventilation bidirectionnel (20) selon la revendication 6, **caractérisé par** la feuille de filtre (23) comprenant des bords de positionnement (23.1) qui sont enfermés dans le canal de positionnement (24.2) de ladite couverture (24) et la feuille de filtre (23) étant fixée audit couvercle (24) par un moyen de procédé d'adhésion ou d'éléments de raccords.

8. Bouchon de ventilation bidirectionnel (20) selon la revendication 1, **caractérisé par** le corps (21) comprenant une paroi (28) sur laquelle le couvercle (24) intégré avec la feuille de filtre (23) est placé.

9. Bouchon de ventilation bidirectionnel (20) selon la revendication 1, **caractérisé par** le corps principal (21) comprenant des bords pliés inférieurs (21.1) qui positionnent ledit filtre (22) dans le boîtier de filtre (25).

10. Bouchon de ventilation bidirectionnel (20) selon la revendication 7, **caractérisé en ce que** les bords de positionnement (23.1) de ladite feuille de filtre (23) possèdent une forme en S (23.3).

11. Bouchon de ventilation bidirectionnel (20) selon la revendication 10, caractérisé en comprenant la zone d'influence d'orifice (P) qui se produit grâce à ladite forme en S (23.3) et permet à l'air d'être évacué facilement et complique l'admission d'air depuis l'extérieur vers l'intérieur.

12. Bouchon de ventilation bidirectionnel (20) selon la revendication 1, **caractérisé en ce que** ladite feuille de filtre (23) comprend une entrée de flux d'air (23.4) qui permet un flux d'air depuis l'extérieur vers l'intérieur du filtre (22) et de là vers le système, ou vice versa.

13. Bouchon de ventilation bidirectionnel (20) selon la revendication 1, **caractérisé par** le corps principal (21) comprenant des saillies latérales (29) conçues de façon à créer un angle droit avec le plan de montage (Y) lorsqu'il est comparé audit axe de montage orthogonal (X).

14. Bouchon de ventilation bidirectionnel (20) selon la revendication 13, **caractérisé par** le couvercle (24), comprenant l'angle de positionnement (24.3), possédant le même angle avec lesdites saillies latérales (29).
